# EUROPEAN PATENT SPECIFICATION

(11) **EP 1 242 793 B1**
(45) Date of publication and mention of the grant of the patent: **13.08.2008**
(21) Application number: 00946603.8
(22) Date of filing: 19.06.2000
(51) Int. Cl.: G01F 23/284, G01S 13/08

(54) **METHOD AND DEVICE FOR LIQUID LEVEL MEASUREMENT BY MEANS OF RADAR RADIATION**
METHODE UND GERÄT ZUR MESSUNG DES FÜLLSTANDES VON FLÜSSIGKEITEN PER RADARSTRAHLUNG
SYSTEME ET PROCEDE SERVANT A MESURER LE NIVEAU D'UN LIQUIDE AU MOYEN D'UN RAYONNEMENT RADAR

(30) Priority: 02.07.1999 SE 9902594; 22.05.2000 US 576544
(43) Date of publication of application: 25.09.2002
(73) Proprietor: Rosemount Tank Radar AB, 402 51 Göteborg (SE)
(72) Inventor: KLEMAN, Mikael, S-590 61 Vreta Kloster (SE)
(74) Representative: Lind, Urban Arvid Oskar
(86) International application number: PCT/SE2000/001291
(87) International publication number: WO 2001/002818

(56) References cited:
- WO-A1-90/09599
- US-A- 4 665 403
- US-A- 5 305 237
- US-A- 5 406 842
- US-A- 5 504 490

## Description

The present invention relates to a method according to the preamble of claim 1.

The invention also relates to a device according to the preamble of claim 6.

A level measuring system working with radar for a tanker's load tanks is previously known from US-A 4,665, 403. In load tanks of this kind, however, at least one overfill alarm independent of the level measuring system is required. The requirement for independence means that there must not be common electrical circuits and cabling, i.e. there must not be any galvanic contact between different measuring systems. However, fixed mechanical constructions for example, which cannot normally go wrong, may be shared. Float sensors and different types of capacitive sensors, for example, mounted in separate tank bushings are used as sensors for such alarm systems. These sensors are however sensitive to linings, corrosion and other influence from the content of the load tanks or their wiring and the risk of malfunction is therefore evident.

The object of the present invention is to achieve a method of the type indicated by way of introduction which is not marred by the disadvantages described above. This object is achieved by the features stated in claim 1.

The invention also has the object of producing a device according to claim 6 which is improved compared with the prior art. This is achieved with the characterizing features stated in said claim.

A number of other advantages are obtained with the invention. By utilizing a single aerial for two or more level measuring channels, costs are saved for further aerials and fitting in the tank as well as the tank bushing for these. If two measuring channels are identical, redundant measuring results are obtained, which if they only lie within a certain tolerance range are proof that the measuring channels are functioning. Several identical measuring channels also make the stocking of spare parts easier and cheaper.

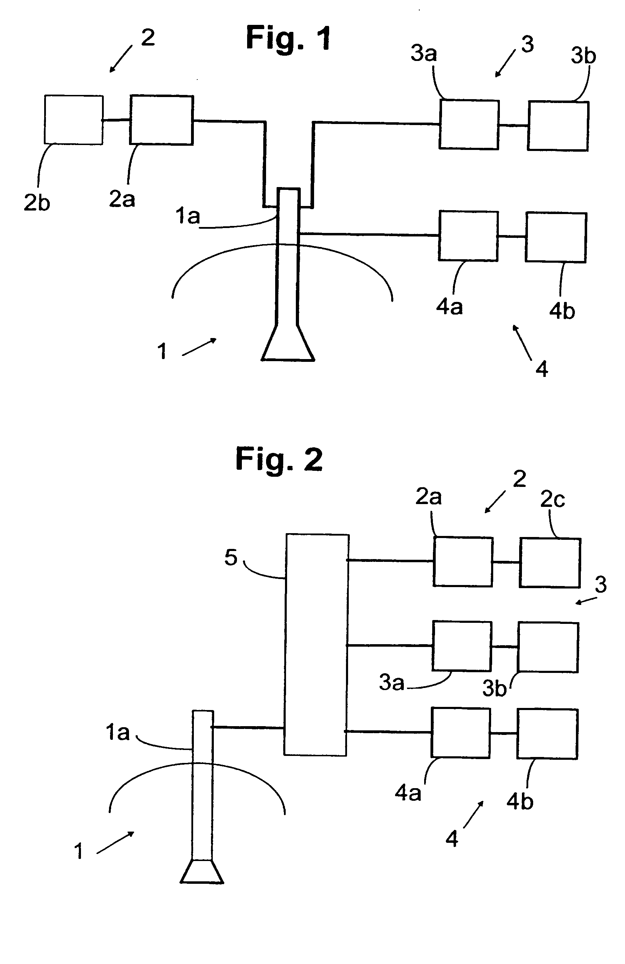

The invention is to be explained further below with reference to the enclosed drawing, in which Figures 1 and 2 show diagrammatically two alternative ways of realizing the invention for level measurement - alarm indication for a tanker's load tanks, but it is evident that the invention can be used for all types of liquids and bulk material.

In the drawing, I generally designates an aerial. This can be a fixed or movable parabolic aerial, a conical aerial, a transmission line or a straight tube aerial. Connected to the aerial I is a radar measuring channel 2 comprising a transmitter / receiver 2a and an indicating device 2b designed to indicate the current level and generate an alarm at a predetermined level. According to the invention at least one further radar measuring channel is connected to the aerial 1, in the embodiment shown in the drawing there are two further radar measuring channels 3 and 4 respectively, each comprising a transmitter / receiver 3a and 4a respectively and an indicating device 3b and 4b respectively. To prevent radar waves transmitted by a transmitter e.g. in measuring channel 2 from being received reflected by the receivers in measuring channels 3 or 4, the radar waves from each channel are distinguishable by a detectable characteristic for each wave, e.g. by means of updating time-wise, polarization and/or modulation.

It will be appreciated that several different measuring and alarm alternatives can be provided using one or more additional measuring channels. For example, a measurement can be carried out using one extra radar measuring channel 3, which measurement is redundant to a level measurement carried out using measuring channel 2. If the measuring values from both measuring channels lie within predetermined tolerance values, it can hereby be verified with a very high degree of probability that the level value measured is correct. Alternatively, a high level alarm can be obtained with the extra measuring channel 3 in the form of an alarm at a maximum permitted level or an overfill alarm.

With two further measuring channels 3, 4 it is possible at the same time to execute both a redundancy measurement and produce a high level alarm. Alternatively, a level measurement can be executed using measuring channel 2, a high level alarm obtained with measuring channel 3 and an overfill alarm with measuring channel 4.

The devices according to Figures 1 and 2 differ essentially only with regard to how the measuring channels 2, 3 and 4 are connected to the aerial 1. In Fig. 1, the measuring channels are connected to a supply lead I a to the aerial. In the alternative shown in Fig. 2, the measuring channels 2, 3 and 4 are connected to the supply lead I a via a power divider 5 known to the expert.

## Claims

1. Method of measuring surface level of a medium in a receptacle comprising the steps of :
providing at least two radar measuring channels (2, 3, 4), wherein each channel has transmitting and reception means (2a, 3a, 4a) for electromagnetic waves and a level indicating device (2b, 3b, 4b),
transmitting in a first channel (2) a first electromagnetic wave via an aerial (1) directed down into the receptacle,
receiving in said first channel (2) the first electromagnetic wave reflected by the surface back to said aerial (1) with a first time delay,
calculating the level based on said first time delay,
transmitting in a second channel (3, 4) a second electromagnetic wave via one and the same aerial (1),
receiving in said second channel (3, 4) the second electromagnetic wave reflected by the surface back to said aerial (1) with a second time delay,
calculating the level based on said second time delay and
distinguishing said first and said second electromagnetic wave by a detectable characteristic.

2. Method according to claim 1, wherein the first and second wave are distinguishable time-wise.

3. Method according to claim 1, wherein the first and second wave are distinguishable by means of modulation and/or polarization.

4. Method according to any one of claims 1 - 3, wherein the level measurement executed with the second wave is redundant with respect to the level measurement executed with the first wave.

5. Method according to any one of claims 1 - 3, wherein the level measurement performed with one of said electromagnetic waves at a pre-deteimined surface level produces a high level alarm, such as an overfill alarm.

6. Device for indication of surface level of a medium in a receptacle by means of radar, **characterized in that** the device comprises at least two radar measuring channels (2, 3, 4), wherein each channel has transmitting and reception means (2a, 3a, 4a) for electromagnetic waves and a level indicating device (2b, 3b, 4b), a first channel (2) transmitting and receiving a first electromagnetic wave via an aerial directed down into the receptacle, a second channel (3, 4) transmitting and receiving a second electromagnetic wave via one and the same aerial (1) and said first and second electromagnetic waves distinguishable by means for detecting first and second wave characteristics.

7. Device according to claim 6, wherein said second (3, 4) measuring channel is redundant channel with respect to said first measuring channel (2).

8. Device according to claim 6, wherein one of said at least two channels (3, 4) is arranged to measure and indicate a maximum permitted level.

9. Device according to claim 6, wherein said first radar measuring channel (2) is measuring the level of the surface, said second measuring channel (3) is used as a redundant level measurement channel and a third measuring channel (4) is arranged to measure a maximum permitted level.

10. Device according to claim 6, wherein said measuring channels (2, 3, 4) are connected to the aerial (1) by either each channel (2, 3, 4) connected to a supply lead to the aerial, or each channel (2, 3, 4) connected to the aerial (1) via a power divider (5).

## Patentansprüche

1. Verfahren zum Messen des Oberflächenpegels eines Mediums in einem Behälter mit den Schritten:
Verwendung von mindestens zwei Radarmesskanälen (2, 3, 4), wobei jeder Kanal Sende- und Empfangseinrichtungen (2a, 3a, 4a) für elektromagnetische Wellen und ein Pegelangabegerät (2b, 3b, 4b) hat,
Sendung einer ersten elektromagnetischen Welle in einem ersten Kanal (2) über eine nach unten in den Behälter gerichtete Antenne (1),
Empfang der von der Oberfläche mit einer ersten Zeitverzögerung zurück zu der Antenne (1) reflektierten ersten elektromagnetischen Welle in dem ersten Kanal (2),
Berechnung des Pegels aufgrund der ersten Zeitverzögerung, Sendung einer zweiten elektromagnetischen Welle in einem zweiten Kanal (3, 4) über ein und dieselbe Antenne (1),
Empfang der von der Oberfläche mit einer zweiten Zeitverzögerung zurück zu der Antenne (1) reflektierten zweiten elektromagnetischen Welle in dem zweiten Kanal (3, 4),
Berechnung des Pegels aufgrund der zweiten Zeitverzögerung und
Unterscheidung der ersten und der zweiten elektromagnetischen Welle durch eine feststellbare Charakteristik.

2. Verfahren nach Anspruch 1, bei dem die erste und zweite Welle zeitlich unterscheidbar sind.

3. Verfahren nach Anspruch 1, bei dem die erste und zweite Well mittels Modulation und/oder Polarisation unterscheidbar sind.

4. Verfahren nach einem der Ansprüche 1 bis 3, bei dem die mit der zweiten Welle ausgeführte Pegelmessung bezüglich der mit der ersten Welle ausgeführten Pegelmessung redundant ist.

5. Verfahren nach einem der Ansprüche 1 bis 3, bei dem die mit einer der elektromagnetischen Wellen bei einem vorbestimmten Oberflächenpegel durchgeführte Pegelmessung einen Hochpegelalarm wie beispielsweise einen Überfüllungsalarm erzeugt.

6. Vorrichtung zur Angabe des Oberflächenpegels eines Mediums in einem Behälter mittels Radar,
**dadurch gekennzeichnet, dass** die Vorrichtung mindestens zwei Radarmesskanäle (2, 3, 4) aufweist, wobei jeder Kanal Sende-und Empfangseinrichtungen (2a, 3a, 4a) für elektromagnetische Wellen und ein Pegelangabegerät (2b, 3b, 4b) hat, wobei ein erster Kanal (2) über eine nach unten in den Behälter gerichtete Antenne eine erste elektromagnetische Welle sendet und empfängt, ein zweiter Kanal (3, 4) über ein und dieselbe Antenne (1) eine zweite elektromagnetische Welle sendet und empfängt und die ersten und zweiten elektromagnetischen Wellen durch Einrichtungen zum Feststellen charakteristischer Merkmale der ersten und der zweiten Welle unterscheidbar sind.

7. Vorrichtung nach Anspruch 6, worin der zweite (3, 4) Messkanal ein bezüglich des ersten Messkanals (2) redundanter Kanal ist.

8. Vorrichtung nach Anspruch 6, worin einer der mindestens zwei Kanäle (3, 4) dazu eingerichtet ist, einen maximal zulässigen Pegel zu messen und anzugeben.

9. Vorrichtung nach Anspruch 6, worin der erste Radarmesskanal (2) den Pegel der Oberfläche misst, der zweite Messkanal (3) als redundanter Pegelmesskanal verwendet wird und ein dritter Messkanal (4) dazu eingerichtet ist, einen maximal zulässigen Pegel zu messen.

10. Vorrichtung nach Anspruch 6, worin die Messkanäle (2, 3, 4) **dadurch** mit der Antenne (1) verbunden sind, dass entweder jeder Kanal (2, 3, 4) an eine zu der Antenne führende Zuführleitung angeschlossen ist oder jeder Kanal (2, 3, 4) mit der Antenne (1) über einen Leistungsteiler (5) verbunden ist.

## Revendications

1. Procédé de mesure du niveau de surface d'un milieu dans un réceptacle, comprenant les étapes consistant à :
prévoir au moins deux canaux de mesure radar (2, 3, 4), où chaque canal possède un moyen de transmission et de réception (2a, 3a, 4a) destiné à des ondes électromagnétiques et un dispositif d'indication de niveau (2b, 3b, 4b),
transmettre sur un premier canal (2) une première onde électromagnétique via une antenne (1) dirigée vers le réceptacle,
transmettre, sur ledit premier canal (2), la première onde électromagnétique réfléchie par la surface vers ladite antenne (1) avec un premier retard temporel,
calculer le niveau sur la base dudit premier retard temporel,
transmettre, sur un second canal (3, 4), une seconde onde électromagnétique via une seule et même antenne (1),
recevoir, sur ledit second canal (3, 4), la seconde onde électromagnétique réfléchie par la surface vers ladite antenne (1) avec un second retard temporel,
calculer le niveau sur la base dudit second retard temporel, et
faire la distinction entre ladite première et ladite seconde onde électromagnétique à l'aide d'une caractéristique détectable.

2. Procédé selon la revendication 1, dans lequel la première et la seconde onde peuvent être distinguées dans le temps.

3. Procédé selon la revendication 1, dans lequel la première et la seconde onde peuvent être distinguées à l'aide d'une modulation et/ou d'une polarisation.

4. Procédé selon l'une quelconque des revendications 1 à 3, dans lequel la mesure du niveau exécutée avec la seconde onde est redondante par rapport à la mesure du niveau exécutée avec la première onde.

5. Procédé selon l'une quelconque des revendications 1 à 3, dans lequel la mesure du niveau effectuée avec l'une desdites ondes électromagnétiques à un niveau de surface prédéterminé produit une alarme de niveau élevé, telle qu'une alarme de trop-plein.

6. Dispositif destiné à indiquer le niveau de surface d'un milieu dans un réceptacle à 1' aide d'un radar, **caractérisé en ce que** le dispositif comprend au moins deux canaux de mesure radar (2, 3, 4), dans lequel chaque canal possède un moyen de transmission et de réception (2a, 3a, 4a) destiné à des ondes électromagnétiques et un dispositif d'indication de niveau (2b, 3b, 4b), un premier canal (2) transmettant et recevant une première onde électromagnétique via une antenne dirigée vers le réceptacle, un second canal (3, 4) transmettant et recevant une seconde onde électromagnétique via une seule et même antenne (1), et ladite première et ladite seconde onde électromagnétique peuvent être distinguées à l'aide d'un moyen de détection d'une première et d'une seconde caractéristique d'onde.

7. Dispositif selon la revendication 6, dans lequel ledit second (3, 4) canal de mesure est un canal redondant par rapport audit premier canal de mesure (2).

8. Dispositif selon la revendication 6, dans lequel l'un desdits deux canaux au moins (3, 4) est agencé afin de mesurer et d'indiquer un niveau maximum autorisé.

9. Dispositif selon la revendication 6, dans lequel ledit premier canal de mesure radar (2) mesure le niveau de la surface, ledit second canal de mesure (3) est utilisé comme un canal de mesure de niveau redondant et un troisième canal de mesure (4) est agencé afin de mesurer un niveau maximum autorisé.

10. Dispositif selon la revendication 6, dans lequel lesdits canaux de mesure (2, 3, 4) sont reliés à l'antenne (1) par chaque canal (2, 3, 4) relié à un fil d'alimentation de l'antenne, ou chaque canal (2, 3, 4) relié à l'antenne (1) via un séparateur de puissance (5).
